# EUROPEAN PATENT APPLICATION

(11) **EP 4 624 880 A1**
(43) Date of publication of application: **01.10.2025**
(21) Application number: 24166732.8
(22) Date of filing: 27.03.2024
(51) Int. Cl.: G01H 17/00, G10K 15/04

(54) **SENSOR MODULE AND CALIBRATION METHOD**

(71) Applicant: Hochschule für angewandte Wissenschaften Landshut, 84036 Landshut (DE)
(72) Inventor: HUBER, Konstantin, 85084 Reichertshofen (DE); RÖDIGER, Tim, 84032 Landshut (DE)
(74) Representative: Hoefer & Partner Patentanwälte mbB

(57) **Abstract**

The present invention concerns a sensor module for thermoelectric detection of acoustic waves, comprising a sensor unit comprising a substrate-based atomic layer thermopile sensor, henceforth ALTP-sensor, wherein an active layer of the ALTP-sensor is thermally coupled with the substrate and the ALTP-sensor is configured to sense a heat flux from the substrate to a surrounding fluid surrounding the ALTP-sensor and to output a voltage signal depending on the sensed heat flux; and an evaluation unit configured to receive and evaluate the voltage signal output by the ALTP-sensor, wherein the evaluation unit is configured to evaluate a frequency and/or amplitude of the acoustic waves based on a time-dependent change of the voltage signal.

## Description

The invention concerns a sensor module for thermoelectric detection or thermoelectric generation of acoustic waves as well as a calibration method for calibrating the sensor module.

Conventionally, substrate-based atomic layer thermopile sensors (henceforth referred to as ALTP-sensors) are known from for example Knauss, Helmut, Tim Roediger, Uwe Gaisbauer, Ewald Kraemer, Dimitry Bountin, Boris Smorodsky, Anatoli Maslov, J Srulijes, und Friedrich Seiler "A Novel Sensor for Fast Heat Flux Measurements" in 25th AIAA Aerodynamic Measurement Technology and Ground Testing Conference, San Francisco, California: American Institute of Aeronautics and Astronautics, 2006, https://doi.org/10.2514/6.2006-3637. Therein, ALTP-sensors are described as heat flux sensors which are based on a transverse Seebeck effect (so-called "category IV sensors") and are only configured to sense heat flux.

Further details on ALTP-sensors as well their implementation and calibration are known from for instance:
Zeuner, S., 1994, "Atomlagenthermosäulen in Hochtemperatur-Supraleitern als schnelle Strahlungsdetektoren", Regensburg University, Regensburg, Germany, and
Huber, K., and Rödiger, T., 2021, "Comparison of Radiation and Convection-Based Calibration of Fast-Response Heat Flux Sensors", Proceedings of the ASME Turbo Expo 2020, London, UK, June 22-26, 2020, V005T05A006, pp. 1-13.

However, none of the prior known ALTP-sensors have been used for the detection or the generation of acoustic waves.

It is an object of the present invention to provide a sensor module for thermal electric detection or thermoelectric generation of acoustic waves with a high sensitivity or low detection threshold, and which is especially less sensitive to vibrations, in the case of generation of acoustic waves with advantageously high precision of generation of acoustic waves. Furthermore, it is an object of the present invention to provide a calibration method for calibrating the sensor module in an easy and efficient manner.

Solutions to these objects are provided by the subject matter of the independent claim. The dependent claims contain advantageous embodiments of the present invention.

In the following, primarily the thermoelectric detection of acoustic waves will be discussed. However, the present invention may also appropriately be used for the thermoelectric generation of acoustic waves. In other words, where the functions of a microphone are referred to, these may correspondingly be replaced by functions of a speaker.

In particular, solutions to these objects are achieved via a sensor module for thermoelectric detection or generation of acoustic waves according to claim 1. The sensor module comprises a sensor unit and an evaluation unit. The sensor unit comprises a substrate-based atomic layer thermopile sensor (ALTP-Sensor), wherein an active layer of the ALTP-sensor is thermally coupled with the substrate of the substrate-based ALTP-sensor. For instance, the active layer of the ALTP-sensor is thermally coupled with the substrate by preferably being bound thereto on an atomic level. The ALTP-sensor is configured to sense a heat flux from the substrate to a surrounding fluid which surrounds the ALTP-sensor. Furthermore, the ALTP-sensor is configured to output a voltage signal depending on the sensed heat flux. The evaluation unit is configured to receive and evaluate the voltage signal output by the ALTP-sensor. The evaluation unit is configured to evaluate a frequency and/or amplitude of the acoustic waves based on a time-dependent change of the voltage signal.

The ALTP-sensor of the sensor unit is configured to sense the heat flux from the substrate to the surrounding fluid. When an acoustic wave, especially a periodic acoustic wave in the audible spectrum and/or in the ultrasound spectrum, impinges on the sensor module, this not only causes a pressure change, but also a corresponding temperature change. Therefore, with the evaluating unit of the sensor module being configured to receive and evaluate the time-dependent change of the voltage signal, the sensor module is configured to detect acoustic waves impinging on the sensor module. Due to the sensor unit having a high sensitivity for heat flux from the substrate to the surrounding fluid, the sensor module has an advantageously high sensitivity for impinging acoustic waves, especially in the audible spectrum and/or in the ultrasound spectrum. Further yet, the sensor unit is less sensitive to vibrations which reduces noise or increases signal-to-noise ratio.

In one advantageous embodiment, the sensor module further comprises a heating unit configured to regulate a temperature of the sensor unit, especially of the substrate, to a temperature higher than an ambient temperature of the sensor unit. In other words, the heating unit is preferably configured to regulate the temperature of the sensor unit to a temperature higher than that of the surrounding fluid. Thereby, the detection threshold of the sensor can be advantageously reduced.

One physical explanation for the increase in sensitivity or reduction of detection threshold is that the sensor module interacts with its surrounding fluid, the two having a boundary layer therebetween. By heating the sensor module or sensor unit, the adjacent fluid of the boundary layer is also heated and a thermal boundary-layer is generated adjacent to the sensor unit. The impinging acoustic waves interact with this heat-boundary-layer, especially in a non-linear fashion. This interaction is measured by the sensor unit as a heat flux signal. Thus, the sensitivity for the acoustic wave detection is higher when the sensor unit is heated within this preferable embodiment. It should be noted that "temperature of surrounding fluid" does not include this thermal boundary-layer, but encompasses the temperature of the surrounding fluid for example in a state in which the sensor unit is not present or is not heated.

In an example, in which the sensor module was placed in a room with temperature of roughly 20°C, and the sensor unit was heated to 40°C, the detection threshold was reduced by 20 W/cm².

In other examples, the sensor unit was heated to 45°C (same surrounding fluid temperature of roughly 20°C) and measured a 1 kHz signal with 9.5dB versus a conventional microphone with 114.0 dB. In the same configuration, but heated to 100°C, the sensor unit measured said signal at 12.0 dB. It should be noted that although the conventional microphone measured the acoustic wave with a stronger signal, especially in an exemplary case in which it is mounted on a moving vehicle, the conventional microphone also measures many vibrations and generally higher noise. The present embodiment thus provides a sensor unit for acoustic waves with overall better signal-to-noise ratio.

Preferably, the heating unit is configured to generate a substantially constant heat flux from the sensor unit to the surrounding fluid, especially from the substrate to the surrounding fluid. Preferably, the "heat flux being substantially constant" is defined as being the heat flux when no substantial acoustic waves are present. Further preferably, "no substantial acoustic waves" refers to a state at which acoustic waves are present only below the detection threshold of the sensor module.

Preferably, an amplitude of the voltage signal is substantially linearly dependent on the heat flux. Further preferably, the amplitude of the voltage signal is one to preferably a few to preferably a few hundred microvolts (µmV).

Further preferably, an amplitude of the acoustic waves impinging on the sensor module is proportional to an absolute value of change of the voltage signal, especially an absolute value of change of the amplitude of the voltage signal, by a factor of proportionality. Thereby, the evaluation unit can easily and efficiently evaluate the frequency and/or amplitude of the impinging acoustic waves based on the time-dependent change of the voltage signal.

Preferably, the sensor unit is configured to sense a heat flux of 0.01 W/cm² or more, preferably 0.005 W/cm² or more, as the detection threshold. Thereby, the sensor unit is capable of detecting acoustic waves, while simultaneously advantageously not having sensitivity to small vibrations.

In one advantageous embodiment, the heating unit comprises at least one Joule-heating heating element. In other words, the heating unit preferably comprises a heating element based on heating via an electric current flowing through a conductor and producing heat. This has the advantage that the heating unit can suitably heat the substrate in an efficient manner using cost-effective components.

In addition or alternatively thereto, the heating unit comprises at least one cartridge heater.

In one advantageous embodiment, the heating unit preferably comprises a heating cycle with a heating fluid thermally coupled to the sensor unit, especially coupled to the substrate. Preferably therein, the heating unit comprises a heating element spatially separate from the sensor unit and coupled with the sensor unit via a heating fluid of a heating cycle. Thereby, efficient heating of the sensor unit is achieved while simultaneously advantageously reducing temperature variations caused for example by variations in contact surfaces between the heating element and the sensor unit due to thermal expansion coefficient differences.

In a further advantageous embodiment, the heating unit comprises at least one radiation heat source. Preferably, the at least one radiation heat source outputs broadband or monochromatic radiation suitable for heating.

In some advantageous embodiments, the sensor module further comprises a Kundt's tube, wherein the sensor unit is disposed on a sensor end opposite an open end of the Kundt's tube into which the acoustic waves enter. In other words, the Kundt's tube comprises a sensor end and an open end, wherein the sensor end is closed, especially via the sensor unit, and the open end remains open. Preferably, the Kundt's tube is filled with a fluid, especially with the aforementioned surrounding fluid. Therein, the impinging acoustic waves enter the open end of the Kundt's tube and propagate through the Kundt's tube to the sensor end thereof and impinge upon the ALTP-sensor. This has the advantage that the sensor module can be used as a directional microphone.

Preferably, the sensor end of the Kundt's tube comprises a cover with an opening, wherein the sensor unit protrudes through the opening of the cover into the Kundt's tube. In other words, the cover closes, together with the sensor unit, the sensor end of the Kundt's tube. Thereby, directionality of the sensor module is further improved.

Preferably, the sensor unit is mounted on a ring, especially an aluminum ring.

Further, the sensor module preferably comprises a moveable mount attached to the ring and configured to allow rotational and/or translational movement of the sensor unit via the ring. Thereby, the directionality of the sensor module, i.e. from which direction acoustic waves are sensed, can be controlled and actively altered.

Preferably, the moveable mount is attached to a rail system for translational movement. Thereby, translational movement of the sensor unit can be achieved with low vibrations and thus with lower noise detected by the sensor module.

The present invention also concerns a calibration method for calibrating the sensor module according to any one of the foregoing described preferable embodiments. Therein, the calibration method comprises simultaneously detecting acoustic waves with the sensor module and with a sound microphone, especially a conventional calibrated sound microphone. Furthermore, the method comprises calculating a factor of proportionality for amplitudes of the acoustic waves between an amplitude of the time-dependent change of the voltage or heat flux signal and an amplitude detected by the sound microphone. Preferably, the frequency of the heat signal (frequency of the time-dependent change of the voltage signal) corresponds to the frequency of the impinging acoustic waves. Therein, the amplitude of the impinging acoustic waves sensed by the sensor module is calculated via the proportionality factor, which is calculated by comparing amplitudes of the signal detected by the sensor module with those detected by the sound microphone. Further therein, the amplitude of the acoustic wave is preferably varied, and the proportionality factor is determined for acoustic waves within a range of such variation.

Preferably, the frequency of the heat flux signal is equal to the frequency of the impinging acoustic waves such that calibration with respect to a sensed frequency of the impinging acoustic waves using the sensor module according to the foregoing is not necessary.

Preferably, the surrounding fluid is a gas, especially air, and/or a liquid, especially water.

Preferably, the sensor module of the foregoing embodiments is configured to be used as a speaker, i.e. as a speaker unit for thermoelectric generation of acoustic waves. Therein, inputting the aforementioned voltage signals results in an output of acoustic waves in a manner corresponding to the foregoing described detection thereof. Preferably herein, the aforementioned heating unit for regulating the temperature of the sensor is replaced by a cooling unit for regulating the temperature of the speaker. Therein, the cooling unit preferably regulates the temperature of such a speaker unit to a temperature lower than that of the surrounding fluid Thereby, the increase in sensitivity by the heating unit in the sensor unit is achieved as an increase in acoustic precision (for example, full width half height of generated acoustic waves) when generating acoustic waves with the speaker unit.

Further, details, advantages, and features of the preferred embodiments of the present invention are described in detail with reference to the figures. Therein:
- Fig. 1: shows a schematic side view of a sensor module according to an embodiment of the present invention;
- Fig. 2: shows a graph depicting measurement results from the sensor module of Fig. 1; and
- Fig. 3: shows a schematic block diagram depicting a calibration method for the sensor module according to an embodiment of the present invention.

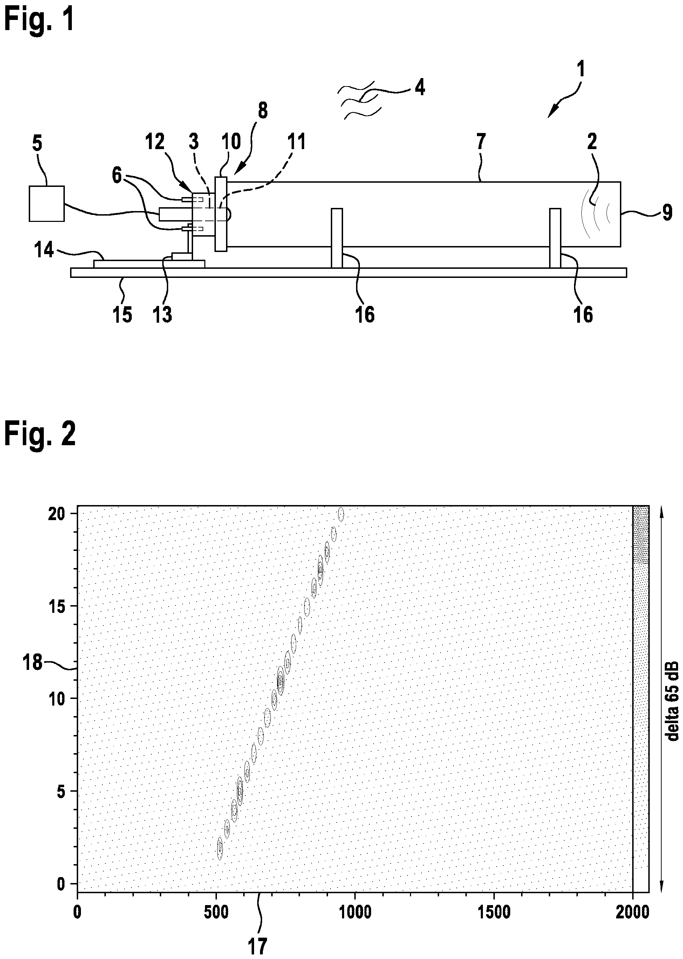

Fig. 1 shows a schematic side view of a sensor module 1 according to an embodiment of the present invention.

The sensor module 1 is configured to sense or detect acoustic waves 2, which impinge on the sensor module 1, thermoelectrically, as will be explained in detail below.

The sensor module 1 comprises a sensor unit 3 and an evaluation unit 5.

The sensor unit 3 comprises a substrate-based atomic layer thermopile sensor (ALTP-Sensor). Therein, an active layer of the ALTP-sensor is thermally coupled with the substrate of the substrate-based ALTP-sensor.

The ALTP-sensor is configured to sense a heat flux from the substrate to a surrounding fluid 4 which surrounds the ALTP-sensor, i.e. which surrounds the sensor unit 3.

Furthermore, the sensor unit 3 is configured to output a voltage signal depending on the sensed heat flux. The evaluation unit 5 is configured to receive and evaluate the voltage signal output by the sensor unit 3. The evaluation unit 5 is further configured to evaluate a frequency and/or amplitude of the acoustic waves 2 based on a time-dependent change of the voltage signal.

The ALTP-sensor of the sensor unit 3 is configured to sense the heat flux from its substrate to the surrounding fluid 4. When an acoustic wave 2, especially a periodic acoustic wave in the audible spectrum and/or in the ultrasound spectrum, impinges on the sensor module 3, this not only causes a pressure change, but also a corresponding temperature change. Therefore, with the evaluating unit 5 of the sensor module 3 being configured to receive and evaluate the time-dependent change of the voltage signal, the sensor module 1 is configured to detect acoustic waves impinging thereon.

Furthermore, due to the ALTP-sensor of the sensor module 3 having a high sensitivity for heat flux from its substrate to the surrounding fluid 4, the sensor module 3 has an advantageously high sensitivity for impinging acoustic waves 2, especially in the audible spectrum and/or in the ultrasound spectrum.

The surrounding fluid 4 is preferably air or water.

In the present embodiment, the sensor module 1 further comprises a heating unit 6 configured to regulate a temperature of the substrate, i.e. of the sensor unit 3, to a temperature higher than an ambient temperature of the sensor unit 3. The ambient temperature of the sensor unit 3 is roughly equal to the temperature of the surrounding fluid 4. Thereby, the detection threshold of the sensor can be advantageously reduced.

The detection threshold is particularly dependent on a temperature difference between the sensor module 1 and the surrounding fluid 4. In particular, the detection threshold is directly proportional to the heat flux from the sensor module 1 to the surrounding fluid 4. For example, assuming a constant heat transfer coefficient (commonly denoted "h"), then the heat flux is directly proportional to ΔT. For example, if the sensor module 1 is at 21°C, whereas the surrounding fluid 4 is at 20°C, then ΔT = 1 W/cm². If the sensor module 1 is at 40°C, the surrounding fluid 4 at 20°C, then ΔT = 20 W/cm² such that the detection threshold can be reduced by 20 W/cm².

In particular, the heating unit 6 is configured to generate a substantially constant heat flux from the substrate to the surrounding fluid 4. In other words, under the assumption that the temperature of the surrounding fluid 4 remains constant, the heating unit 6 is configured to heat the sensor unit 3 with a constant power (W).

The heating unit 6 of the present embodiment comprises two heating cartridges disposed so as to surround the sensor unit 3. In modifications to the present embodiment, the heating unit 6 may comprise three or more heating cartridges disposed so as to surround the sensor unit 3.

The sensor module 1 further comprises a Kundt's tube 7, wherein the sensor unit 3 is disposed on a sensor end 8 opposite an open end 9 of the Kundt's tube 7 into which the acoustic waves 2 enter. In other words, the Kundt's tube 7 comprises the sensor end 8 and the open end 9, wherein the sensor end 8 is closed, especially via the sensor unit 3, and the open end 9 remains open.

The Kundt's tube 7 is filled with the surrounding fluid 4. Therein, the impinging acoustic waves 2 enter the open end 9 of the Kundt's tube 7 and propagate through the Kundt's tube 7 to the sensor end 8 thereof and impinge upon the ALTP-sensor of the sensor unit 3. This has the advantage that the sensor module 1 can be used as a directional thermoelectric microphone.

The sensor end 8 of the Kundt's tube 7 comprises a cover 10 with an opening 11, wherein the sensor unit 3 protrudes through the opening 11 of the cover 10 into the Kundt's tube 7. Thereby, the cover 10 closes, together with the sensor unit 3, the sensor end 8 of the Kundt's tube 7.

As can be taken from Fig. 1, the sensor unit 3 is mounted on a ring 12, especially an aluminum ring.

Further, the sensor module 1 comprises a moveable mount 13 attached to the ring 12. The moveable mount 13 is configured to allow rotational and/or translational movement of the sensor unit 3 via the ring 12. Thereby, the directionality of the sensor module 1, i.e. from which direction acoustic waves 2 are sensed, can be controlled and actively altered.

The moveable mount 13 may comprise an electric machine connected to a control unit (not shown). The control unit and the evaluation unit 5 may be integrated in a single compute unit, for example a CPU.

Furthermore, the moveable mount 13 is attached to a rail system 14 for translational movement. Thereby, translational movement of the sensor unit 3 can be achieved with low vibrations and thus with lower noise detected by the sensor module 1.

The moveable mount 13 is mounted on a base plate 15. The base plate 15 further comprises holding elements 16 holding the Kundt's tube 7.

Fig. 2 shows a graph depicting measurement results from the sensor module 1.

Therein, the abscissa 17 depicts frequency in Hz. The ordinate 18 depicts time in s. In particular, the graph of Fig. 2 shows the measurement results when a sinusoidal sweep as acoustic waves 2 is impinged upon the sensor module 1 as a greyscale. The sinusoidal sweep is a frequency sweep of acoustic waves 2, in the shown experimental measurement from 500 Hz to 1 kHz within roughly 20 s. Therein, the greyscale extends from dark to light over a range of 65 dB.

As demonstrated by the results in Fig. 2, the sensor module 1 is capable of thermoelectric detection of acoustic waves 2.

The sensor module 1 is capable of thermoelectric detection of acoustic waves 2 with high sensitivity while having a low sensitivity for vibrations, thereby resulting in an advantageous signal-to-noise ratio.

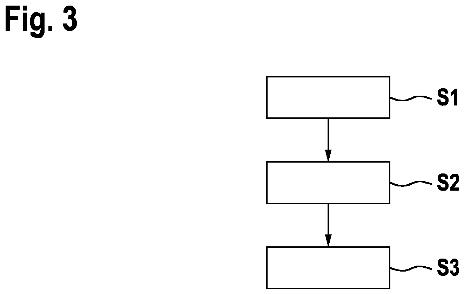

Fig. 3 shows a schematic block diagram depicting a calibration method for the sensor module 1 according to an embodiment of the present invention.

Therein, the calibration method comprises detecting acoustic waves with the sensor module in step S1. Further, the method comprises detecting acoustic waves 2 (the same acoustic waves 2) with a sound microphone, especially a conventional calibrated sound microphone, in step S2. Steps S1 and S2 are carried out simultaneously. Furthermore, the method comprises calculating a factor of proportionality for amplitudes of the acoustic waves 2 between an amplitude of the time-dependent change of the voltage or heat flux signal and an amplitude detected by the sound microphone in step S3.

In other words, in step S3, the factor of proportionality is calculated by comparing the amplitudes measured by the sensor unit 3 with the amplitudes measured by the microphone. Then, when the sensor module 1 afterwards detects acoustic waves 2, the amplitudes of these detected acoustic waves 2 can be evaluated by multiplying the factor of proportionality with the amplitude of the detected voltage or heat flux signal.

The frequency of the heat signal (frequency of the time-dependent change of the voltage signal output by the sensor unit 3) corresponds to the frequency of the impinging acoustic waves 2. Therein, the amplitude of the impinging acoustic waves 2 sensed by the sensor module 1 is calculated via the proportionality factor, which is calculated in step S3 by comparing amplitudes of the signal detected by the sensor module 1 with those detected by the sound microphone.

The foregoing described method is preferably carried out by the evaluation unit 5.

Thereby, the heat signal of the sensor unit 3 can be evaluated, by the evaluation unit 5, so as to output the frequency and amplitude of the detected impinging acoustic signal (acoustic waves 2).

In the foregoing, primarily the thermoelectric detection of acoustic waves by the sensor module 1 was discussed. However, the present invention may also appropriately be used for the thermoelectric generation of acoustic waves by the sensor module 1. In other words, where the functions of a microphone are referred to, these may correspondingly be replaced by functions of a speaker. For example, where a certain signal of an acoustic wave 4 is detected by the sensor module 1, said same signal input to the sensor module 1 will output/generate a corresponding acoustic wave 4.

In addition to the foregoing written explanations, it is explicitly referred to Figs. 1 to 3, wherein the figures in detail show configuration examples of the invention.

### Reference numerals

- 1: sensor module
- 2: acoustic waves
- 3: sensor unit
- 4: surrounding fluid
- 5: evaluation unit
- 6: heating unit
- 7: Kundt's tube
- 8: sensor end
- 9: open end
- 10: cover
- 11: opening
- 12: ring
- 13: moveable mount
- 14: rail system
- 15: base plate
- 16: holding element
- 17: abscissa
- 18: ordinate

## Claims

1. Sensor module (1) for thermoelectric detection or thermoelectric generation of acoustic waves (2), comprising:
• a sensor unit (3) comprising a substrate-based atomic layer thermopile sensor, henceforth ALTP-sensor, wherein an active layer of the ALTP-sensor is thermally coupled with the substrate and the ALTP-sensor is configured to sense a heat flux from the substrate to a surrounding fluid (4) surrounding the ALTP-sensor and to output a voltage signal depending on the sensed heat flux; and
• an evaluation unit (5) configured to receive and evaluate the voltage signal output by the ALTP-sensor, wherein the evaluation unit (5) is configured to evaluate a frequency and/or amplitude of the acoustic waves (2) based on a time-dependent change of the voltage signal.

2. Sensor module (1) according to claim 1, further comprising a heating unit (6) configured to regulate a temperature of the sensor unit (3) to a temperature different than an ambient temperature of the sensor unit (3).

3. Sensor module (1) according to claim 2, wherein the heating unit (6) is configured to generate a substantially constant heat flux from the sensor unit (3) to the surrounding fluid (4), especially from the substrate to the surrounding fluid (4), the heat flux being substantially constant when no substantial acoustic waves (2) are present.

4. Sensor module (1) according to any one of the foregoing claims, wherein an amplitude of the voltage signal is substantially linearly dependent on the heat flux.

5. Sensor module (1) according to any one of the foregoing claims, wherein an amplitude of the acoustic waves (2) is proportional to an absolute value of change of the voltage signal by a factor of proportionality.

6. Sensor module (1) according to any one of the foregoing claims, wherein the sensor unit (3) is configured to sense a heat flux of 0.01 W/cm² or less.

7. Sensor module (1) according to any one of claims 2 to 6, wherein the heating unit (6) comprises at least one Joule-heating heating element.

8. Sensor module (1) according to any one of claims 2 to 7, wherein the heating unit (6) comprises at least one cartridge heater.

9. Sensor module (1) according to any one of claims 2 to 8, wherein the heating unit (6) comprises a heating cycle with a heating fluid thermally coupled to the sensor unit (3).

10. Sensor module (1) according to any one of the foregoing claims, further comprising a Kundt's tube (7), wherein the sensor unit (3) is disposed on a sensor end (8) opposite an open end (9) of the Kundt's tube (7) into which the acoustic waves (2) enter.

11. Sensor module (1) according to claim 10, wherein the sensor end (8) of the Kundt's tube (7) comprises a cover (10) with an opening (11), wherein the sensor unit (3) protrudes through the opening (11) of the cover (10) into the Kundt's tube (7).

12. Sensor module (1) according to any one of the foregoing claims, wherein the sensor unit (3) is mounted on a ring (12), especially an aluminum ring.

13. Sensor module (1) according to claim 12, further comprising a moveable mount (13) attached to the ring (12) and configured to allow rotational and/or translational movement of the sensor unit (3) via the ring (12).

14. Sensor module (1) according to claim 13, wherein the moveable mount (13) is attached to a rail system (14) for translational movement.

15. Calibration method for calibrating the sensor module (1) according to any one of the foregoing claims, comprising simultaneously detecting acoustic waves (2) with the sensor module (S1) and detecting acoustic waves (2) with a sound microphone (S2), and calculating a factor of proportionality for amplitudes of the acoustic waves (2) between an amplitude of the time-dependent change of the voltage or heat flux signal and an amplitude detected by the sound microphone (S3).
